# EUROPEAN PATENT APPLICATION

(11) **EP 4 616 709 A1**
(43) Date of publication of application: **17.09.2025**
(21) Application number: 24212317.2
(22) Date of filing: 08.03.2024
(51) Int. Cl.: A01M 23/38, A01M 1/02, A01M 23/00

(54) **A METHOD FOR DETECTING PESTS IN A TRAP**

(62) Divisional of application: 24162345.3
(71) Applicant: Anticimex Innovation Center A/S, 3200 Helsinge (DK)
(72) Inventor: RAGNARSSON, Bergsteinn Gauti, Helsinge (DK); SØRENSEN, Claus Bach, Helsinge (DK); HOHNEN, Peter, Helsinge (DK)
(74) Representative: Zacco Denmark A/S

(57) **Abstract**

A method (800) for installing a trap (100) for detecting one or more pests is provided. The method comprises placing (802) the trap (100) in a target location, scanning (804) a marker (132) provided on the trap (100) by using a reading device (314) of an operator apparatus (300), determining (806) trap identification data (302) based on trap reading data provided by the reading device (314) by using a data processing device (316) of the operator apparatus (300), uploading (808) the trap identification data (302) from the operator apparatus (300) to a server (200), and retrieving (810) trap specification data (312) comprising information about the one or more gas sensors (106) being used in the trap (100) and information about the one or more non-gas sensors (108) being used in the trap (100) in response to transferring the trap identification data (302) to a database (308).

## Description

### Technical Field

The technology disclosed herein generally relates to pest control. More particularly, it is disclosed methods for detecting pests in traps, methods for installing the traps, the traps as such, as well as a system comprising a plurality of traps and a server holding a data processing model.

### Background Art

Today, it is known to detect and identify insects by using sensor-equipped traps configured to capture and analyze volatile organic compounds (VOCs). The VOCs are released by the insects as part of their chemical communication system. The compounds act as pheromones, signaling substances,that convey information about the insect's species, sex and physiological state.

A commonly used technique for registering the VOCs is to use so-called electroantennography (EAG). In short, this technique measures electrical activity of insect antenna when exposed to specific chemicals, including the VOCs. This helps identify the compounds that elicit responses in insects. Gas chromatography (GS) is often coupled with mass spectrometry (MS) to separate and analyze complex mixtures of VOCs emitted by insects. By using EAG and GS-MS in combination, it is possible to identify specific compounds involved in insect signaling.

Electronic noses, sometimes referred to as digital noses, are designed to mimic the olfactory system and can detect and differentiate between various VOCs. By having traps with sensors in the form of electronic noses, rapid and non-invasive identification of pests, such as insects and rodents, can be achieved. In the field of agriculture, this type of traps are used for identifying the presence of certain types of insects to allow for timely intervention and pest control measures. By having the information about the VOCs and how different insects are attracted to different VOCs, it is possible to also make use of this information to make tailor-made attractant. For instance, it is made possible to produce attractants specifically targeting a certain insect species.

Even though electronic noses and other sensors for capturing VOCs have proven successful in identifying insects, the traps equipped with such sensors are not widespread. One reason for this is cost. The electronic noses, i.e. gas sensors, come with a relatively high cost. This cost comes both in that the hardware is, compared to other sensor types, complex and as an effect relatively expensive, and that developing electronic nose-based systems are generally complex and hence require substantial research and development investments. In addition, also when having the systems developed, there is also a cost involved in fine-tuning the different VOC profiles to meet different local requirements, e.g. the different VOC profiles may be somewhat different in different parts of the world.

### Summary

It is an object of the invention to at least partly overcome one or more of the above-identified limitations of the prior art. In particular, it is an object to provide a cost efficient, but yet reliable trap for pest detection and/or pest identification. This is generally solved by having the trap provided with one or more gas sensors for generating gas sensor data, e.g. VOC data, and one or more non-gas sensors for generating non-gas sensor data, e.g. audio data, air pressure data, humidity sensor data etc. By combining these two types of sensors, none of the two types of sensors necessarily have to provide reliable detection and/or identification over a full spectrum of available combinations, which provides for improved cost efficiency. Put differently, instead of using a complex sensor addressing one type of parameter, two less complex sensors addressing different kinds of parameters can be used. By making use of a data processing model, such as a neural network, that can be trained, it is made possible in a cost efficient manner to provide instructions for how the different types of data should be combined for detecting and/or identifying the pests reliably.

According to a first aspect it is provided a method for detecting one or more pests in a trap, wherein the trap comprises one or more entrances, a capture compartment, one or more gas sensors arranged to register airborne substances released in the capture compartment and one or more non-gas sensors arranged to register one or more environmental parameters in the capture compartment and/or in the one or more entrances, a control circuitry, comprising a processor and a memory, arranged to control operation of the one or more gas and non-gas sensors, and a data processing model communicatively connected to the control circuitry. The method may comprise
obtaining gas sensor data indicative of the airborne substances using the one or more gas sensors,
obtaining non-gas sensor data indicative of the one or more environmental parameters using the one or more non-gas sensors,
providing the gas sensor data and the non-gas sensor data as inputs to the data processing model, and
generating output data from the data processing model, wherein the output is indicative of presence or non-presence of the one or more pests in the capture compartment.

In addition to providing reliable detection of pests, it is an advantage that the gas sensor data and the non-gas sensor data do not have to provide full information for making reliable decisions regarding presence or non-presence of pests in isolation. By way of example, using one or more gas sensors in combination with other types of sensors arranged to measure physical parameters not related to the gas provided in the trap namely provides for that a total cost of the sensors being used in the trap can be reduced. In addition, by not only relying on the gas sensor data, such as VOC data, the presence detection is less dependent on air composition changes, air flow changes etc.

The airborne substances may be volatile organic compounds (VOCs).

The method may further comprise providing opening size data related to opening size(s) of the one or more entrances as input to the data processing model.

By providing geometrical information as input to the data processing model, more reliable detections can be made. For instance, by using the opening size data as input provides for that detections related to species of a size larger than the opening size may be given no or less significance in the data processing model when predicting probability of the presence of such species. Being provided as input in this context should be understood to also cover being part of limitations related to the data processing model. For instance, in case the data processing model is arranged to determine presence or non-presence as well as identifying the pest species, the opening size data may form part of limitations related to the different species that are to be identified such that mismatches between species identification and the opening size can be avoided. The opening size data may also be used in other ways. For instance, some pest species may be prone to avoid entering into traps in case the opening size of the entrance is above a certain size. By using the opening size data as input also such effects can be reflected in the processing of the gas sensor data and the non-gas sensor data in the data processing model.

The trap may further comprise a camera arranged to capture image data depicting the capture compartment, and the method may further comprise, in case the output data indicates presence of the one more pests in the capture compartment, capturing the image data depicting the capture compartment using the camera.

The image data may be stored internally in the trap, e.g. on a memory card. Another option is that the image data is transferred to the server. Since transferring the image data consumes energy, it is beneficial that this transfer can be conditional on that the presence of pests is identified based on the gas sensor data and the non-gas sensor data. Compared to having the image data transfer being conditional on a presence detection made by using a passive infrared (PIR) sensor, the presence detection made by the combination of the gas sensor data and the non-gas sensor data can be made more reliable, in particular for insect pests, which as an effect provides for that a risk of transferring image data incorrectly can be reduced, in turn improving the energy efficiency of the trap.

The trap may further comprise a data communication device arranged to communicate with an operator apparatus, and the method may further comprise
receiving location data related to a geographical location of the trap from the operator apparatus, and
providing the location data as input to the data processing model.

By using the operator apparatus, which may be a mobile phone equipped with a GPS receiver or the like, it is possible to indirectly determine the location data, also referred to as position data, indirectly. A positive effect of this is that the cost of the trap can be reduced.

By having the location data at hand, it is made possible to link external data, such as weather data, to the trap such that this information can be taken into account by the data processing model when determining presence or non-presence of pests, as well as species identification of the pests.

The one or more non-gas sensors may comprise a capacitive grid provided in a floor area of the capture compartment.

By having the capacitive grid, information about the size of the pests can be retrieved. Since detections made by using the capacitive grid is generally uncorrelated to air borne substances provided in the trap, using data provided from this grid in combination with the gas sensor data provides for that reliable detections can be made.

The one or more non-gas sensors may comprise a microphone.

By having the non-gas sensor data generated by one or more microphones provided in the capture compartment, at the entrances and/or on a housing of the trap, audio data is provided. Since different insects may have different sounds for communication, different sounds generated from walking patterns etc, this type of data can be combined with the gas sensor data for improving detection reliability.

The one or more non-gas sensors may comprise a humidity sensor and/or an air pressure sensor.

The humidity sensor may be arranged to quantify an amount of moisture in air present in the capture compartment, and the air pressure sensor may be arranged inside the trap to monitor pressure changes inside the capture compartment. By having the non-gas sensor data being data generated by any of these two types of sensors, information related to the conditions under which that the gas sensor data has been captured is provided to the data processing model. By doing so, it is made possible to improve the presence detection reliability.

According to a second aspect it is provided a method for installing a trap for detecting one or more pests, the method may comprise
placing the trap in a target location,
scanning a marker provided on the trap by using a reading device of an operator apparatus,
determining trap identification data based on trap reading data provided by the reading device by using a data processing device of the operator apparatus,
uploading the trap identification data from the operator apparatus to a server, and
retrieving trap specification data comprising information about the one or more gas sensors being used in the trap and information about the one or more non-gas sensors being used in the trap in response to transferring the trap identification data to a database.

By having the marker, which may be a QR code, an RFID tag or any other device capable of providing an identification code related to the trap, it is possible by using the trap identification data to retrieve information about the trap from the server or any other external source. In this way, the trap specification data can be amended and/or extended after the trap has been produced, shipped and even installed. For instance, additional geometrical properties of the trap may be added to the trap specification data in case such properties are found to be relevant for the assessment of presence or non-presence.

The method may further comprise
determining location data by using a location determining device of the operator apparatus,
uploading the location data from the operator apparatus to the server, and
linking the location data to the trap identification data.

By having access to the location data, it is made possible to retrieve weather data and other external data from external data sources that may be relevant in determining the presence or non-presence of pests, as well as pest species identification. By making use of the location determining device, which may be a GPS receiver in a mobile phone, the location data can be associated with the trap without the need for additional equipment in the trap, thereby improving cost efficiency.

The method may further comprise
identifying other traps within a communication range of the trap by using the location data,
in case no communication is established between the trap and one or more of the other traps within the communication range,
generating inter-trap communication failure notification data.

An effect of being provided with the location data indirectly by using the operator apparatus is that traps placed nearby can be identified by comparing the location data of different traps. If traps placed close to one another are identified in this manner, and these traps are not communicatively connected to one another, an inter-trap communication failure notification may be provided to an operator such that measures can be taken. Thus, in addition to having the benefits of associating external data to the traps by using the traps' locations, the locations may also be used for assuring communication between the traps. In this context it should be mentioned that the location data is not restricted to be location data generated based on data provided by satellites, but also other positioning approaches may be used. For instance, the location data may be generated based on data obtained from location nodes placed indoor and/or outdoor.

The method may further comprise
transferring target pest species data from the operator apparatus to the server,
determining existence probability data based on the target species data and the location data,
in case the existence probability data is below a threshold,
issuing a target species data reconsideration request using the operator apparatus.

The target species data may comprise information about the pest species the trap is intended to detect and/or identify. With this information at hand, and possibly also other data such as weather data, the existence probability data can be determined. In other words, by sharing the target pest species data with the server and not only keep this information isolated to the trap, it is made possible to make a dynamic assessment of the likelihood that the pests that the trap is set to address can be determined. In case of incorrect settings made by the operator results in a probability below the threshold, this can be identified and the reconsideration request can be issued such that the mistake can be corrected. As an alternative, this existence probability data can be used as input to the data processing model to further improve detection and/or identification.

The method may further comprise
scanning a marker provided on the attractant by using the reading device of the operator apparatus,
determining an attractant identification data based on attractant reading data provided by the reading device by using the data processing device of the operator apparatus,
uploading the attractant identification data from the operator apparatus to the server, and
retrieving attractant specification data comprising information about the attractant in response to transferring the attractant identification data to the database.

To be able to identify and retrieve data associated with the attractant, this can be provided with the marker in a similar manner as the trap. The marker of the attractant may be a QR code or similar printed on the attractant and/or a package of the attractant, but other ways of marking, e.g. RFID tags, may also be used. By having the attractant specification data stored in a database or other storage device external to the trap, it is made possible to continuously update this information. For instance, in case the data processing model is made to take additional data into account, the attractant specification data can be updated without direct access to the traps.

According to a third aspect it is provided a trap for pests, said trap comprising
one or more entrances,
a capture compartment,
one or more gas sensors arranged to register airborne substances released in the capture compartment,
one or more non-gas sensors arranged to register one or more environmental parameters in the capture compartment, in the one or more entrances and/or outside the trap,
a control circuitry, comprising a processor and a memory, and
a data processing model communicatively connected to the control circuitry,
wherein the control circuitry is configured to control the trap to
capture gas sensor data indicative of the airborne substances using the one or more gas sensors,
capture non-gas sensor data indicative of the environmental parameter using the one or more non-gas sensors, and
transfer the gas sensor data and the non-gas sensor data as inputs to the data processing model such that output data from the data processing model indicative of presence or non-presence of one or more pests in the capture compartment is provided.

The same features and advantages described above with respect to the first and second aspect also apply to this aspect.

A system comprising
a plurality of traps according to the third aspect, and
a server communicatively connected to the plurality of traps, wherein the data processing model is held in the server and shared by the plurality of traps.

In addition to the advantages described above, by having the data processing model shared by multiple traps it is made possible to take into account the gas sensor data and the non-gas sensor data from other traps when determining the presence or non-presence of the pests in a specific trap. In this way more reliable detection can be achieved. In addition, by having several traps associated with one and the same data processing model, an amount of data provided to the data processing model is increased, which is beneficial both from inference perspective, but also training perspective.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 illustrates a cross-sectional view of a trap.
Fig. 2 generally illustrates a system comprising two traps, a server and a terminal.
Fig. 3 generally illustrates how location data obtained via an operator apparatus can be used for retrieving trap specification data from a database.
Fig. 4 generally illustrates how inter-trap communication failures can be identified by associating traps with location data.
Fig. 5 generally illustrates how potentially incorrect settings of the trap made by the operator can be identified and mitigated.
Fig. 6 generally illustrates how attract specification data can be retrieved by using a marker on the attractant.
Fig. 7 is a flowchart illustrating a method for detecting one or more pests in a trap.
Fig. 8 is a flowchart illustrating a method for installing the trap.

### Detailed Description

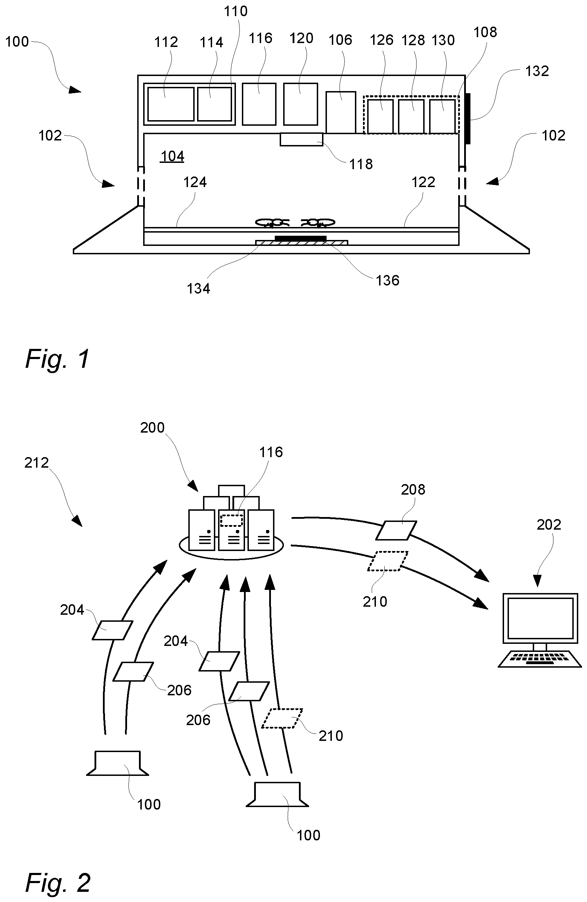

Fig. 1 generally illustrates, by way of example, a cross-sectional view of a trap 100 for pests, such as bed bugs or cockroaches. Even though the trap 100 illustrated is addressing crawling insects, the principles described herein can be used for other insects as well, and also other types of pests, such as rodents.

As illustrated, the trap 100 can be provided with one or several entrances 102. The entrances 102 may, as illustrated, be provided with a sloped walkway. As an alternative, or as a complement, the entrances 102 may be provided with a labyrinth-like entrance. The one or several entrances 102 can lead to a capture compartment 104. This compartment may, as illustrated, be a pitfall area in which the pests fall down into. As an alternative, or as a complement, a glue board can be used.

To be able to detect the pests in the capture compartment 104, one or more gas sensors 106 and one or more non-gas sensors 108 can be provided. The one or more gas sensors 104 may be configured to detect volatile organic compounds (VOCs) such that presence of the pests can be detected, but also such that identification of the pests can be made. This is made possible since different pests have different compositions of VOCs. Even though VOC data can be sufficient for determining the presence of pests, the one or more non-gas sensors 108 are added to provide a more reliable detection. As will be further described below, the non-gas sensors 108 may include a capacitive grid 122 provided in a floor area 124 of the capture compartment 104, a microphone 126, a humidity sensor 128, an air pressure sensor 130, and/or a camera 118. By having the one or more gas sensors 106 combined with the non-gas sensors 108, it is made possible to train a neural network, herein generally referred to as data processing model 116, such that reliable detection can be made.

The one or more gas sensors 106 and non-gas sensors 108 can be communicatively connected to a control circuitry 110 comprising a processor 112 and a memory 114. The control circuitry 110 may in turn be connected to the data processing model 116, such as the neural network. By transferring gas sensor data captured by the one or more gas sensors 106 and non-gas sensor data captured by the one or more non-gas sensors 108 to the data processing model 116 it is made possible to increase reliability of pest detection. One reason for that the detection reliability can be increased is that features comprised in the gas sensor data, which may comprise VOC data, are likely to be invariant to features comprised in the non-gas sensor data. Put differently, by way of example, if the VOC data indicates that there is a cockroach present in the capture compartment 104 and also sound data captured by the microphone 126, herein exemplified as the non-sensor data, indicates that there is a cockroach moving inside the capture compartment 104, there are two indicators, being independent of each other, suggesting that there is a cockroach present. Since the two features are independent, there is a high likelihood that there is a cockroach present.

Different sensor combinations may suit different pests. For instance, for larger crawling insects, such as cockroaches, it may be suitable to detect by using a combination of the VOC sensor and the microphone 126 as described above. A smaller insect, that may not give rise to the same sounds when moving as the cockroach, may be detected by using the VOC sensor combined with the capacitive grid 122. The capacitive grid 122 comprises a network of conductive elements arranged such that when an insect is placed on this grid, one or more capacitance levels are changed. By reading out this capacitance levels, a size of the insect can be determined.

Even though the gas sensor 106 may be a so-called VOC sensor arranged to capture VOCs, the gas sensor 106 may also be arranged to detect other airborne substances. For instance, insects may release proteins, enzymes and the like that are not VOCs that may provide an indication of their presence. For rodents, the airborne substances may, in addition to the VOCs, comprise allergenic proteins released from their fur, secretions that may be released when they are threatened, etc.

The trap 100 may be provided with a marker 132. As illustrated, this marker may be a tag with a QR code, or other printed code, attached to the trap. By having trap identification data connected to the marker 132, it is possible to identify the trap 100 by scanning the marker 132. As an alternative to having the marker embodied as the tag, the marker may be printed or embossed directly onto the trap 100. Still a possibility is to have a near-field communication tag, or other type of electronic marker, attached on or included in the trap 100.

An attractant 134, sometimes referred to as a lure or bait, may also be provided with a marker 136. By having the attractant 134 as well as the trap 100 provided with markers 132, 136, it is made possible to link the trap 100 to a specific attractant 134. For instance, when an operator is replacing the attractant 134 in the trap 100, the marker 132 of the trap 100 can be read as well as the marker 136 of the attractant 134. In addition to linking the trap 100 to the attractant 134, a point of time when placing the attractant 134 in the trap may also be stored. Information about the trap 100 and/or the attractant 134 may be retrieved from the memory of the trap and/or from an external database by using the marker 132 associated with the trap and the marker 136 associated with the attractant, respectively. The information of the trap may comprise the type of gas sensors used in the trap, the type of non-gas sensors used in the trap etc. For the attractant, this information may comprise pheromones included in the attractant. The point of time for placing the attractant in the trap may also be used as input to the data processing model 116.

As an alternative to retrieving information about the trap and marker by using trap identification data retrieved via the marker 132 associated with the trap and attractant identification data retrieved via the marker 136 associated with the attractant, the marker 132 of the trap 100 and the marker 136 of the attractant 134 may themselves comprise the information. For instance, the markers 132, 136 may be RFID tags. Even though herein described that both the attractant 134 and the trap 100 are provided with markers, respectively, it is also possible to only have one of these provided with a marker.

As illustrated in fig. 1, the trap 100 may be a stand-alone trap with the data processing model 116 comprised within the trap 100. With this set-up, there is no or at least a reduced need for data communication between the trap 100 and external devices. By having the data processing model 116, e.g. the neural network, trained for a specific set-up of gas and non-gas sensors, for a specific type of attractant and for a specific pest species, a relatively low complexity of the neural network may be required, which may in turn result in that power consumption can be held at low level, which may in turn result in that the data processing model 116 in such circumstances can be formed as an integral part of the trap 100, which may battery-powered.

In case data communication is less of a problem, e.g. due to that gas sensor and non-gas sensor data is efficiently compressed and data transfer can be scheduled to certain time slots, several traps 100 may be arranged to feed the gas sensor data 204 and non-gas sensor data 206 to a server 200 holding the data processing model 116. In this way, less computational power is needed in the traps 100 for performing the calculations associated with the data processing made by the data processing model. In addition, by feeding data from several traps 100 to the data processing model 116, it is made possible for the data processing model 116 to take into account dependencies between different traps. For instance, by having the data processing model 116 arranged, and trained, for receiving gas sensor data and non-gas sensor data from multiple traps, it is made possible to also cover how pests can spread in a building over time.

The set-up illustrated in fig. 2, i.e. having the data processing model 116 shared between several traps 100, may also be used for training the data processing model 116. During such training, the traps 100 may be provided in an environment in which a known pest species is provided such that the model can be tuned into recognizing presence or non-presence of this known species.

In case the data processing model 116 is to be used in isolation during inference, e.g. the data processing model 116 is to be arranged inside the trap 100, the gas sensor data and the non-gas sensor data retrieved from the different traps may be handled in isolation. By having several traps feeding to the same data processing model 116, there is however the benefit that extensive amounts of data may be generated, which in turn provides for that a complex data processing model, such as a deep neural network, can be trained in a more timely manner.

The gas sensor data 204 and the non-gas sensor data 206 may be provided as inputs to the data processing model 116 as illustrated. Output data 208 from the data processing model 116 may be transferred from the server 200 to a terminal 202. The terminal 202 may be a computer communicatively connected to the server 200. Instead of having the output data 208, which may be an indication of presence or non-presence of pests in the trap, to the terminal 202, the output data 208 can be transferred to an operator apparatus, such as a mobile phone. In case data capturing is made at regular intervals to reduce power consumption, the output data 208 may show that there are pests present or not present. The result does not however need to be binary, but the likelihood of pest presence may be expressed as a probability. To avoid unnecessary data communication, the output data 208 may only be transferred in case this probability is above a threshold, i.e. the likelihood of having a pest trapped is above a pre-set limit. The non-presence indication does however serve a purpose. For instance, this may serve the purpose of verifying that there is data communication between the trap and the server. The output data may also be analyzed over time such that changes over time may be taken into account to determine whether or not pests are present or not.

As illustrated in fig. 1, the trap 100 may comprise the camera 118 arranged to generate image data 210 depicting the capture compartment 104. Since transferring the image data 210 often involves significant data transfer compared to sensors producing one or a few numbers as output, the transferring of the image data 210 may be conditional. For instance, in case the output data 208 indicates the presence of pests, e.g. the probability of pests being present is above the threshold, this may trigger capturing of the image data 210 and transferring of this data from the trap 100 to the server 200, and also possibly from the server 200 to the terminal 202. In this way, in case it is indicated that there are pests present, e.g. a bed bug in a trap in a hotel room, this may easily be verified by the operator at the terminal 202. As an alternative, instead of using the image data 210 for verifying that there are pests present in the trap 100, the image data 210 may also be used for studying the image data 210 from traps in which no clear signal regarding presence or non-presence of pests can be obtained.

By being able to request the image data 210 in this manner also provides for that training the data processing model 116 can be made more efficiently. For instance, by being able to transfer the image data 210 whenever no prediction can be made by certainty by the data processing model, e.g. the neural network may output about the same probability for presence and non-presence, additional data can be obtained for such situations. When providing the image data 210 to the terminal 202, the operator may classify the image data 210 as an example of presence or non-presence, i.e. labelling the data.

In addition to detecting presence and non-presence, the data processing model 116 may also be configured to identify pest species. Also for this aspect, additional data in the form of the image data 210 captured by the camera 188 can be requested in case no species can be determined by certainty.

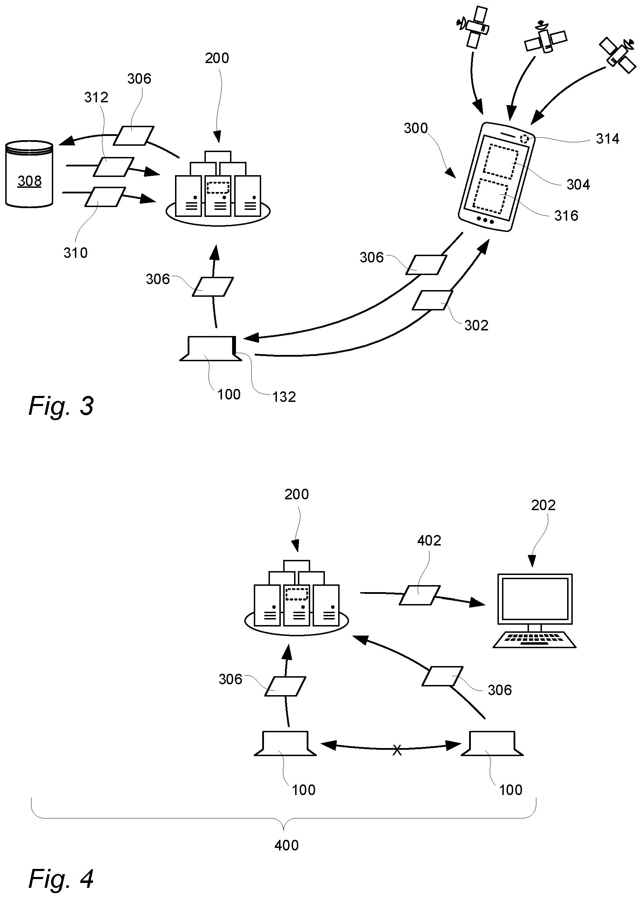

As illustrated in fig. 3, when setting up the trap 100, an operator apparatus 300, such as a mobile phone, may be used. As described above, by reading the marker 132 on the trap 100 by using a reading device 314, e.g. a camera, trap identification data 302 may be obtained by using a data processing device 316 of the operator apparatus 300. This data may be used for identifying the trap 100 such that for instance settings made via the operator apparatus 300 can be linked to the trap 100 even if these settings are stored external to the trap. The trap identification data 100 also enables the operator apparatus 300 to handle several traps at a time, i.e. the operator apparatus 300 can be communicatively connected to several traps when adjusting settings.

In case the operator apparatus 300 is equipped with a location determining device 304, e.g. a GPS receiver, location data, i.e. position, of the operator apparatus 300 can be determined. In case the marker 132 of the trap 100 is a tag or similar, the reading of the marker requires the operator apparatus 300 to be close to the marker. As an effect, location data 306 of the trap 100 can be indirectly determined by using the operator apparatus 300.

As illustrated, the location data 306 may be transferred from the operator apparatus 300 to the trap 100. From the trap 100, the location data 306 may be transferred to the server 200, which may form part of a cloud service. The server 200 may in turn transfer the location data 306 to a database 308. In response to the location data 306, the server 308 may provide external data 310, e.g. weather data, and/or trap specification data 312, e.g. data specifying the type of gas sensors being used, the type of non-gas sensors being used, opening areas of the entrances 102, etc. The external data 310, i.e. data measured by sensors external to the trap 100, and/or the trap specification data 312 may be fed into the data processing model 116 such that this data can be taken into account when determining presence or non-presence of the pests in the trap. In a similar manner, this data may be taken into account for determining the species of the pests in the trap. By way of example, the external data 310 may comprise atmospheric pressure outside a building in which the trap is placed as well as air pressure inside a room of the building in which the trap is placed, this external data in combination with the gas sensor data 204 and the non-gas sensor data 206 may provide for reliable presence detection as well as species identification of the pests in the trap.

To provide for power-efficient and secure data transmission, multiple traps 100 may be communicatively connected to one another such that a mesh network or the like is formed. An effect of associating the location data 306 obtained via the operator apparatus 300 may be that non-connected traps may be identified. As illustrated in fig. 4, such identification may be achieved by obtaining the location data 306 associated with different traps 100. This may be achieved by having the location data 306 provided from the different traps 100 as illustrated, but in case there is the trap identification data 302 available for the different traps 100, the location data 306 may be retrieved from the server 200 or any other apparatus external to the different traps. In case the location data 306 from different traps 100 indicates that the traps 100 are placed close to one another such that wireless communication between them is possible, that is, a distance between two traps are less than a communication range 400, so-called inter-trap communication failure notification data 402 may be generated. This data may take the form of a notification transferred to the terminal 202, e.g. a computer, as illustrated, used for central monitoring, but also to the operator apparatus 300, e.g. a mobile phone, used by operators on the move. After having received the notification, measures may be conducted to assure that the inter-trap communication is performing adequately and/or that correct location data are associated with the different traps.

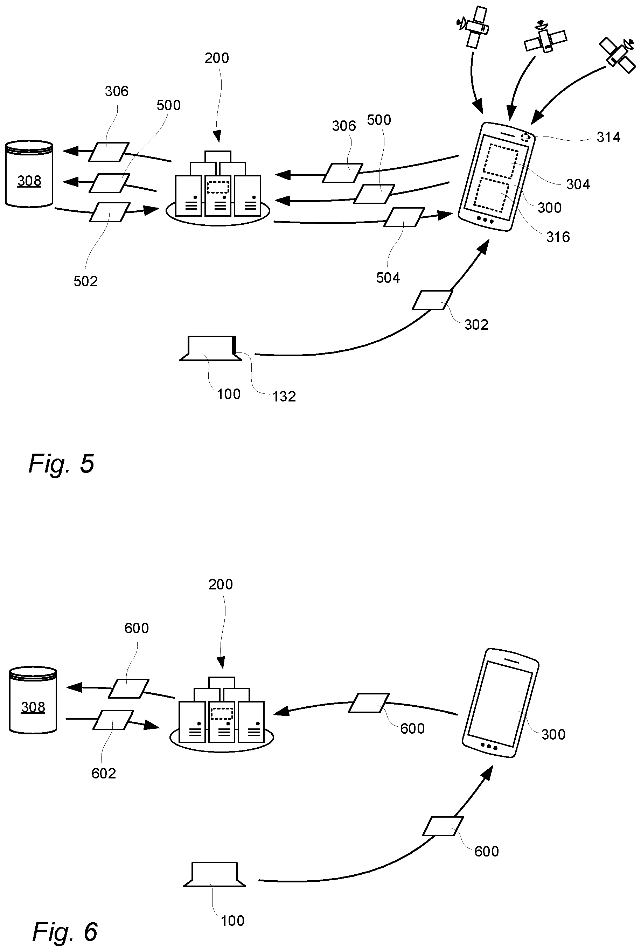

As illustrated in fig. 5, during set up of the trap 100, also referred to as installing the trap 100, the location data 302 associated with the trap 100 may also be used for identifying incorrect settings made by the operator. For instance, after having identified the trap 100 by using the trap identification data 302, settings of the trap 100 may be provided via a user interface of the trap 100. Such settings may relate to the pest species to be targeted, herein referred to as target pest species data 500. The traps may be specifically made for addressing bed bugs or any other species, but it is also possible to have traps arranged to be used for a range of different species. For instance, in case audio data is used as the non-gas sensor data 206, the target pest species data 500 may be associated to frequency patterns characteristic for a particular species. In addition or as an alternative, in case the gas sensor data 204 is the VOC data, this data may also be used for identifying the species.

As illustrated, the target pest species data 500 may be transferred from the operator apparatus 300 together with the location data 306 to the server 200. The server 200 may in turn provide this information to the database 308 and in return be provided with existence probability data 502. This data provides a probability indication of finding the pest species determined to be targeted in the geographical location, defined by the location data 306. In this way, in case the operator by mistake chose to arrange the trap to catch a pest species very unlikely to find in the geographical position, this may be recognized and indicated in a target species data reconsideration request 504 that is provided to the operator apparatus 300. The existence probability data 502 may also be used as input to the data processing model 116 and used for making more reliable assessments of the gas sensor data and non-gas sensor data output from the trap. The existence probability data 502 may be continuously adjusted such that, for instance, current weather conditions are taken into account.

By having the attractant 134 used in the trap 100 provided with the marker 136 provides for that this can be identified as described above. As illustrated in fig. 6, based on attractant identification data 600 associated with the marker 136 of the attractant, attractant specification data 602 can be retrieved from the server 200 and the database 308 as illustrated. More particularly, the attractant identification data 600 can be transferred from the operator apparatus 300 to the server 200, and from the server to the database 308. In response to the attractant identification data 600, the attractant specification data 602 may be provided to the server 200 such that this can be used as input to the data processing model 116. In case the data processing model 116 is contained in the trap, the attractant specification data 602 can be transferred to the trap. An advantage of having the attractant specification data 602 provided centrally, as illustrated, is that information may be added and amended after the traps have been shipped. The attractant specification data 602 may comprise information about which pest species that are likely to be drawn to the attractant, but also information about pest species that are likely to be repelled.

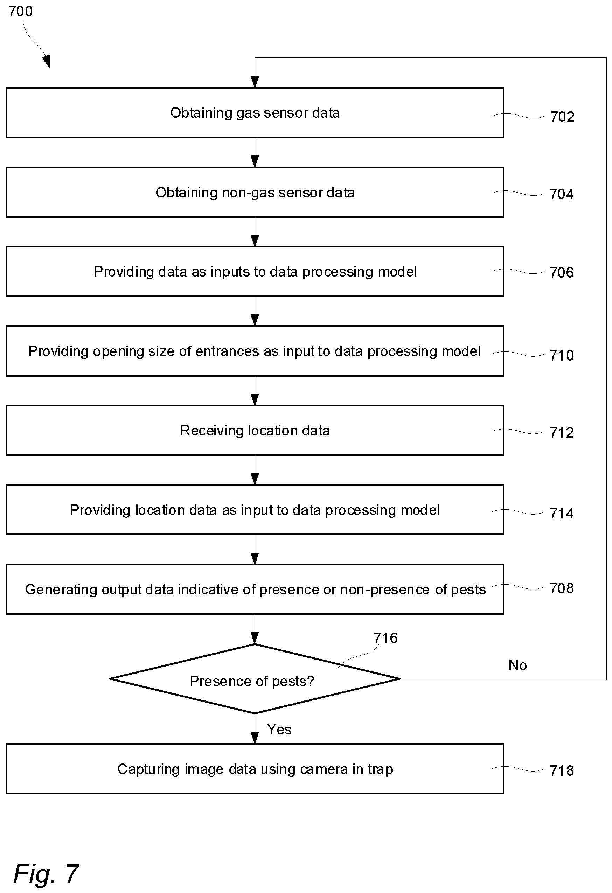

Fig. 7 is a flow chart generally illustrating a method 700 for detecting one or more pests in the trap 100. The method can comprise obtaining 702 the gas sensor data 204 using the one or more gas sensors 106, obtaining 704 the non-gas sensor data 206 using the one or more non-gas sensors 108, providing 706 the gas sensor data and the non-gas sensor data as inputs to the data processing model 116, and generating 708 output data from the data processing model indicative of presence or non-presence of the one or more pests. The method 700 may further comprise providing 710 opening size data related to opening size(s) of the one or more entrances 102. In addition, the method 700 may also comprise receiving 712 the location data 306 and providing 714 the location data as input to the data processing model. Optionally, the method can further include, in case the output data indicates presence of pests 716 in the capture compartment 104, capturing 718 the image data 210 depicting the capture compartment 104 using the camera 118.

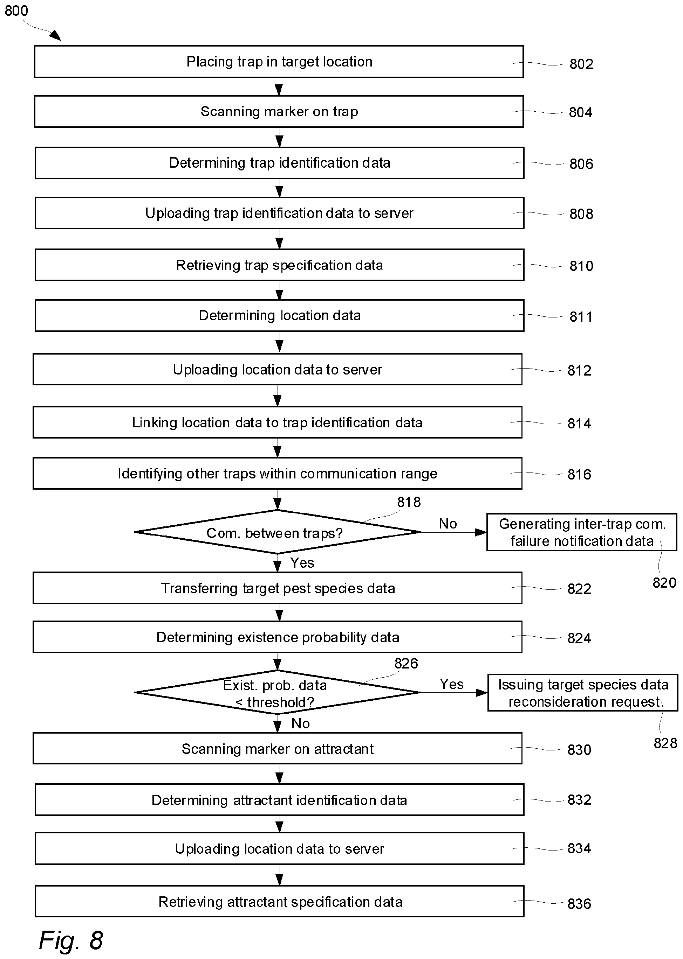

Fig. 8 is a flowchart illustrating a method 800 for installing the trap 100. The method 800 can comprise placing 802 the trap in the target location, scanning 804 the marker provided on the trap, determining 806 the trap identification data 302 based on reading data provided by the reading device 134 of the operator apparatus 300, uploading 808 the trap identification data 302 to the server 200, and retrieving 810 the trap specification data 312 in response to transferring the trap identification data to the database 308.

The method may comprise determining 811 the location data 306 by using the location determining device 304 of the operator apparatus, uploading 812 the location data 306 to the server 200, and linking 814 the location data 306 to the trap identification data 302.

Further, the method may comprise identifying 816 other traps within the communication range 400 using the location data 306, in case no communication is established 818 between the trap 100 and one or more of the other traps within the communication range, generating 820 inter-trap communication failure notification data 402.

Still further, the method 800 may comprise transferring 822 the target pest species data 500 from the operator apparatus 300 to the server 200, determining 824 existence probability data 502 based on the target species data 500 and the location data 306, in case the existence probability data 502 is below a threshold 826, issuing 828 a target species data reconsideration request 504 using the operator apparatus 300.

Even still further, the method 800 may comprise scanning 830 the marker 136 provided on the attractant 134 by using the reading device 314 of the operator apparatus, determining 832 an attractant identification data 600 based on attractant reading data provided by the reading device 314 by using the data processing device of the operator apparatus 300, uploading 834 the attractant identification data 600 from the operator apparatus 300 to the server 200, and retrieving 836 attractant specification data 602 comprising information about the attractant 134 in response to transferring the attractant identification data 600 to the database 308.

From the description above follows that, although various embodiments of the invention have been described and shown, the invention is not restricted thereto, but may also be embodied in other ways within the scope of the subject-matter defined in the following claims.

## Claims

1. A method (800) for installing a trap (100) for detecting one or more pests, the method comprising
placing (802) the trap (100) in a target location,
scanning (804) a marker (132) provided on the trap (100) by using a reading device (314) of an operator apparatus (300),
determining (806) trap identification data (302) based on trap reading data provided by the reading device (314) by using a data processing device (316) of the operator apparatus (300),
uploading (808) the trap identification data (302) from the operator apparatus (300) to a server (200), and
retrieving (810) trap specification data (312) comprising information about the one or more gas sensors (106) being used in the trap (100) and information about the one or more non-gas sensors (108) being used in the trap (100) in response to transferring the trap identification data (302) to a database (308).

2. The method according to claim 1, further comprising
determining (811) location data (306) by using a location determining device (304) of the operator apparatus (300),
uploading (812) the location data (306) from the operator apparatus (300) to the server (200), and
linking (814) the location data (306) to the trap identification data (302).

3. The method according to claim 2, further comprising
identifying (816) other traps (100) within a communication range (400) of the trap (100) by using the location data (306),
in case no communication is established (818) between the trap (100) and one or more of the other traps (100) within the communication range (400),
generating (820) inter-trap communication failure notification data (402).

4. The method according to claim 2 or 3, further comprising
transferring (822) target pest species data (500) from the operator apparatus (300) to the server (200),
determining (824) existence probability data (502) based on the target species data (500) and the location data (306),
in case the existence probability data (502) is below a threshold (826),
issuing (828) a target species data reconsideration request (504) using the operator apparatus (300).

5. The method according to any one of the claims 1 to 4, further comprising
scanning (830) a marker (136) provided on the attractant (134) by using the reading device (314) of the operator apparatus,
determining (832) an attractant identification data (600) based on attractant reading data provided by the reading device (314) by using the data processing device of the operator apparatus (300),
uploading (834) the attractant identification data (600) from the operator apparatus (300) to the server (200), and
retrieving (836) attractant specification data (602) comprising information about the attractant (134) in response to transferring the attractant identification data (600) to the database (308).
